# EUROPEAN PATENT APPLICATION

(11) **EP 2 140 827 A1**
(43) Date of publication of application: **06.01.2010**
(21) Application number: 09008345.2
(22) Date of filing: 26.06.2009
(51) Int. Cl.: A61C 1/08, A61C 8/00

(54) **Implant surgical kit for computer-assisted procedures**

(30) Priority: 30.06.2008 IT MI20081196
(71) Applicant: SAEG S.r.l., 27029 Vigevano (PV) (IT)
(72) Inventor: Cardana, Lorenzo, I-27029 Vigevano (Pavia) (IT); Silvestrelli, Stefano, I-57100 Livorno (IT)
(74) Representative: Rapisardi, Mariacristina

(57) **Abstract**

The implant surgical kit for computer-assisted procedures has been conceived to achieve precision bone drilling parameters, the calibrated system being mounted on cylindrical guide bushes on a surgical template and comprising drills for preparing cylindrical and/or conical implants, on which adapters can be fitted to enable their use for different of the guide bush diameters.

## Description

The present invention relates to an implant surgical kit for computer-assisted procedures, particularly suitable for, but not restricted to applications in dental implantology.

Dental implants are devices inserted in lieu of a lost root and used to support a fixed tooth or to stabilise a dental prosthesis.

The use of implants is made possible by the osteointegration between the vital bone and the implant.

The surgical procedure involves an initial study of the areas of bone by means of x-rays (panoramic, endoral, CT).

This study is used to develop a surgical template presenting a cylindrical guide in line with each implant site where, after the template has been positioned in the oral cavity, the bone is perforated by means of a utensil, which may be a drill, to enable the insertion of the implants.

Computer-assisted design and preparation ensures the utmost precision, safety and quality of the implants.

The drill generally comprises a cylindrical base that supports a drilling utensil at one end and a retaining element at the other end.

This cylindrical base is slidingly coupled to the cylindrical guide, in relation to which it has a conjugated shape, in order to axially guide the drilling utensil during the perforation of the bone.

The retaining element has a diameter greater than that of the base so that, when it comes to interfere with one end of the cylindrical guide, it prevents any forward displacement of the drilling utensil.

The drill, with its constituent parts, i.e. the base, the utensil and the retaining element, is generally made in a single piece.

The particular features of each implant demand the use of a kit of tools, which also includes drills for preparing the site of an implant.

In particular, each drill is characterised by three specific parameters, i.e. the length and diameter of the utensil, and the diameter of the base (depending on the diameter of the cylindrical guide, which in turn depends on the type of implant).

A dental implant surgical kit contains a plurality of drills, which may differ in the diameter of the base or, for the same diameter of the base, they may differ in the length of the utensil or, for the same diameter of the base and length of the utensil, they may differ in the diameter of the utensil.

The number of drills needed is increased due to the fact that, in order to prepare a site with a given diameter while avoiding any deleterious overheating of the bone, it is necessary to proceed in stages, sequentially using drills with progressively increasing diameters of the utensil so as to progressively arrive at the required diameter for the site.

The need for an implant surgical kit containing such a large number of drills undeniably carries numerous drawbacks.

Each drill has a certain cost and it has to be replaced after a preset number of uses.

The kit as a whole is consequently expensive and not easy to manage, given the large number of parts it contains.

In addition, the kit must always be complete because the lack of even only one drill may make it impossible to complete the procedure, and this may give rise to logistic problems relating to the procurement and periodic replacement of the worn drills.

The technical aim of the present invention is consequently to provide an implant surgical kit for computer-assisted procedures that enables the technical drawbacks of the known art to be overcome.

Within the context of this technical aim, one object of the invention is to provide an implant surgical kit for computer-assisted procedures that is complete despite the fact that it contains a limited number of tools and related accessories.

Another object of the invention is to provide an implant surgical kit for computer-assisted procedures that has a better quality/price ratio, and particularly that offers the same quality at a lower price.

Another, not necessarily last object of the invention is to provide an implant surgical kit for computer-assisted procedures that enables a simplified management of the kit and of the implant surgery procedure.

The technical aim, as well as these and other objects according to the present invention, are achieved by the provision of an implant surgical kit for computer-assisted procedures according to claim 1.

Other characteristics of the present invention are defined in the dependent claims.

Additional characteristics and advantages of the invention will emerge more clearly from the description of a preferred, but not exclusive embodiment of the implant surgical kit for computer-assisted procedures according to the invention, illustrated as a non-limiting example in the attached drawings, wherein:
- figure 1 shows a partial longitudinal section of an instrument in which the utensil is a drill according to the present invention for preparing a preferably cylindrical implant, inserted in a first cylindrical guide of a surgical template;
- figure 2 shows the instrument in figure 1 in which the retaining element shown in figure 1 has been replaced by an adapter to accommodate the larger diameter of a second cylindrical guide of the surgical template;
- figure 3 shows a partial longitudinal section of an instrument in which the utensil is a pin, or crest pin, complete with its adapter for application to a cylindrical guide of a surgical template;
- figure 4 is a view from above of the instrument in figure 3;
- figure 5 shows a raised side view of an instrument in which the utensil is a drill for preparing a preferably conical implant according to the present invention; and
- figure 6 shows a raised side view of an instrument in which the utensil is a drill for preparing a preferably conical implant according to an embodiment of the present invention that differs from the one illustrated in figure 5.

Equivalent parts are identified in the description by means of the same reference numbers.

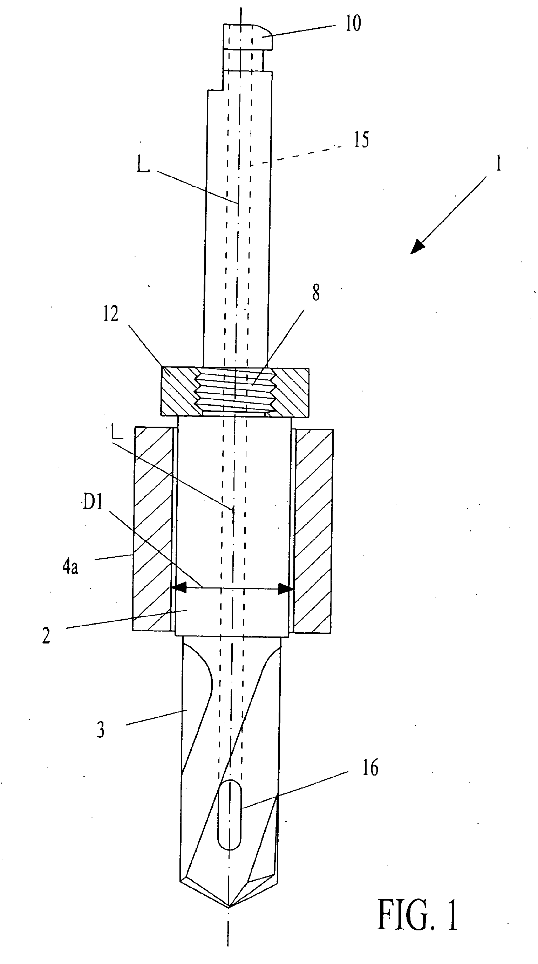

With reference to the above-mentioned figures, a first instrument 1 is shown for each particular type of procedure, in an implant surgical kit for computer-assisted procedures that is particularly but not necessarily for use in dental implantology. The first instrument 1 has a cylindrical base 2 for supporting and guiding a drilling utensil 3 through a first cylindrical guide 4a with an internal diameter D1, shown only for the instrument 1 in figure 1.

The base 2, in particular, has a diameter suited to the internal diameter of the first cylindrical guide 4a so that it is slidingly guided therein.

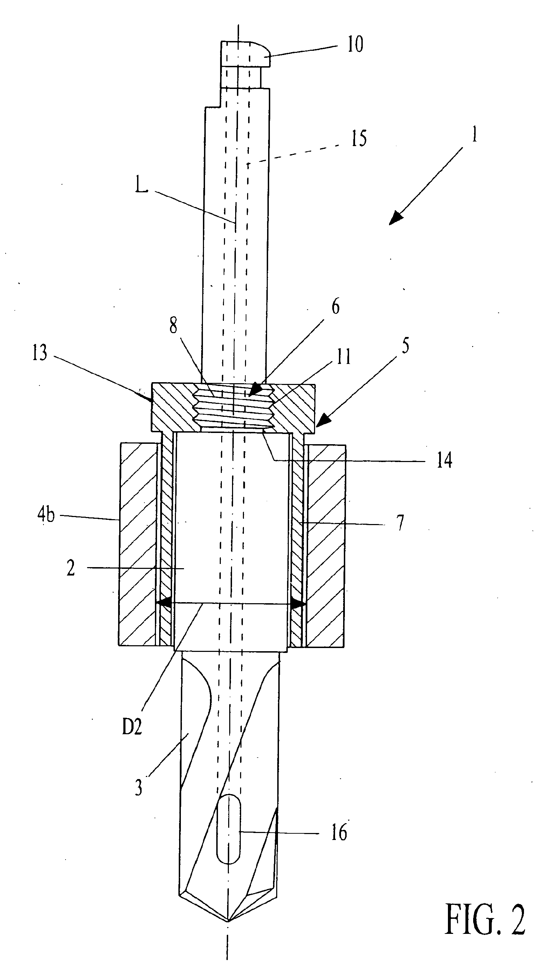

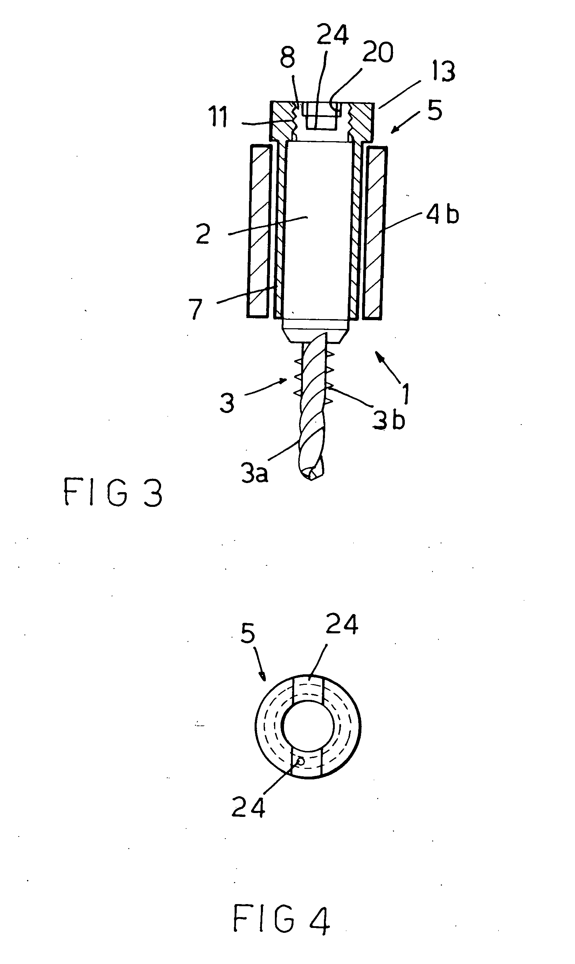

The base 2 has means 6 for its connection to at least one interchangeable adapter 5 (shown only for the instrument 1 in figures 2 and 3) for supporting and guiding the utensil 3 inside a second cylindrical guide 4b with an internal diameter D2 greater than D1 (shown only for the instrument 1 in figures 2 and 3).

The cylindrical guides 4a and 4b can be part, for instance, of a dental surgical template, the development and preparation of which is assisted by a computer that has first acquired and saved data relating to the oral cavity of the patient, recorded by means of a CT scan.

The adapter 5 shown in figure 2 can be chosen from among a plurality of various structurally equivalent adapters for supporting and guiding the utensil 3 inside cylindrical guides of various internal diameters.

The base 2, the utensil 3 and the connection means 6 extend coaxially along the central longitudinal axis L of the first drill 1 and are preferably made in a single piece.

In particular, the adapter 5 comprises a bush 7 suitable for being fitted coaxially onto the base 2 to which the adapter 5 is attachable by means of a specific member engaging with the connection means 6.

The bush 7 has an axial length corresponding to that of the base 2, an internal diameter that is suited to the diameter of the base 2, and an external diameter that is suited to the internal diameter of the second cylindrical guide 4b.

The connection means 6 comprise a threaded stem 8 extending from the centre of the side of the base 2 opposite the side from which the utensil 3 extends.

With the exception of the instrument 1 shown in figure 3, the threaded stem 8 extends with an unthreaded portion terminating with a shaped end 10 for the transmission of a rotational drive from a suitable motor (not shown).

The instrument 1 shown in figure 3, on the other hand, includes a polygonal recess 20, set in the threaded stem 8, that constitutes the takeoff for the transmission of a rotational drive from a suitable motor (not shown).

The part of the adapter 5 for engaging with the connection means 6 comprises a threaded hole 11 for screwing it onto the stem 8.

The implant surgical kit also includes a retaining element 12 for limiting the stroke of the utensil 3 through the first guide 4a.

The retaining element 12 comprises a ring with an external diameter greater than that of the base 2, and with a thread on its internal surface to enable it to be screwed onto the stem 8.

The retaining element 12 is thus removably attached to the first instrument 1, exploiting the same connection means 6 with which the adapter 5 engages.

The adapter 5 in turn includes a retaining element 13, that is also preferably cylindrical, for restricting the stroke of the utensil 2 (3? credo) through the second guide 4b.

The retaining element 13 on the adapter 5 extends radially from a base 14 of the bush 7 on which it is centred.

The retaining element 13 on the adapter 5 and the bush 7 are preferably made in a single piece.

The threaded hole 11 for screwing the adapter 5 onto the stem 8 is made in line with the centre of the retaining element 13.

With the exception of the instrument 1 shown in figure 3, the utensil 3 has an internal channel 15 for the circulation of a cooling fluid.

Said channel 15 extends along the axis L through the base 2 and the stem 8, emerging on the external lateral surface of the utensil 3 through a hole, or outlet 16.

For the instrument 1 shown in figure 1, at least, this outlet lies on the lateral surface of the utensil 3 and extends in the direction of the cylindrical generatrices of the utensil 3, i.e. in the direction of the axis L. In this case, the outlet 16 facilitates the discharge of the cooling fluid even in the event of a pressure of the bone opposing its discharge through the outlet 16. In such cases, the outlet 16 also makes it possible to prevent the sedimentation of any residue inside the channel 15, thereby guaranteeing proper conditions of hygiene and cleanliness.

It is worth noting that the utensil on the instrument 1 shown in figures 1 and 2 is a drill for preparing a preferably cylindrical implant.

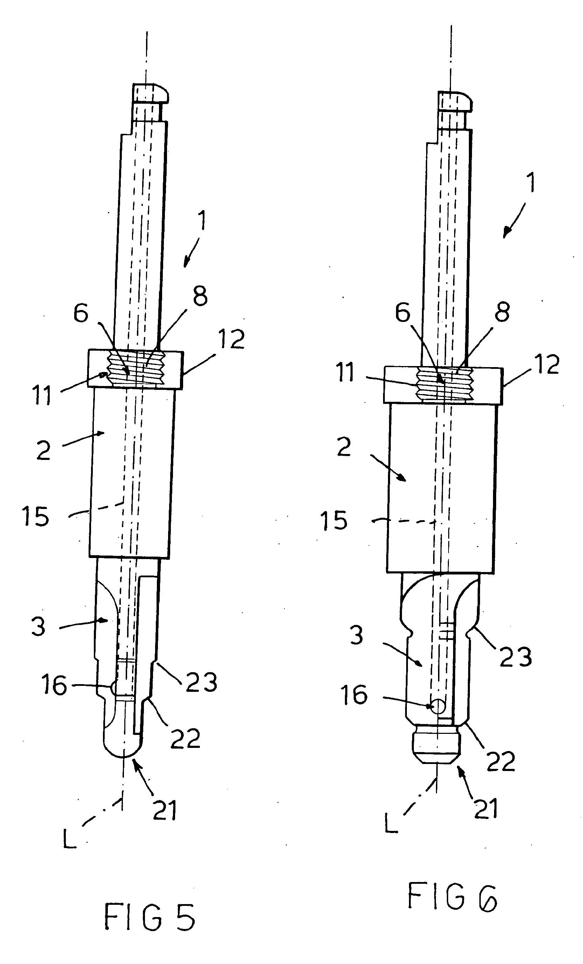

The utensil in the instrument 1 shown in figures 5 and 6, on the other hand, is a drill for preparing a preferably conical implant. In this case, the utensil has an apical guiding portion 21 without a cutting profile, a first cutting profile 22 coinciding with a first diameter in an area proximal to the apical portion 21, and at least a second cutting profile 23 coinciding with a second diameter greater than the first diameter in an area more distal to the apical portion 21. The embodiments of figures 5 and 6 also differ in the length of the apical portion 21 with respect to the longitudinal axis L, and in the distance between the first cutting profile 22 and the second cutting profile 23. These instruments enable the preparation of a conical and cylindrical site with scaled portions by means of a single processing step, unlike the known art wherein the preparation of a conical site generally demands the performance of a series of perforations to progressively decreasing depths using cylindrical drills of progressively increasing diameters.

The instrument 1 shown in figure 4, on the other hand, that we have called a crest pin, has a self-tapping utensil for the preparation of a threaded hole. The utensil 3 has an unthreaded apical stretch 3a for simply penetrating inside the bone and a threaded basal stretch 3b for tapping the site being perforated. The crest pin is temporarily implanted through the cylindrical guide of the template and serves essentially to lock the surgical template in position on the bone to ensure the accurate preparation of the implant site with the aid of the drills, which operate through the cylindrical guide in the surgical template. After the symmetrical positioning of several implants, the crest pins are removed. To enable the removal of the adapter 5 alone, when the instrument 1 is implanted in the bone, the retaining element 13 on the adapter 5 has a superficial recess 24 in a shape conjugated with that of a special utensil (not shown) that engages therewith to enable the adapter 5 to be unscrewed from the threaded stem 8. The use of the crest pin advantageously enables any transversal drilling of the bone (in order to fix the surgical template in position for the subsequent preparation of the implant sites) to be avoided, thus also avoiding the drawbacks relating to said transversal drilling of the bone, which include longer healing times and the difficulty of finding a suitable point for said drilling outside the areas occupied by the roots of healthy teeth, thus making the surgical procedure less invasive.

Moreover, it enables a rapid temporary removal of the surgical template during the clinical procedure, making it easy for the surgeon to reposition it on the horizontal plane.

The implant surgical kit will comprise several structurally equivalent instruments differing in length and/or diameter of the utensil, and each instrument will be complete with a plurality of its own adapters.

The following comparative example, relating for the sake of simplicity to instruments such as drills, gives a better idea of the advantages deriving from the present invention.

### THE CASE OF A CONVENTIONAL IMPLANT SURGICAL KIT

Let us that we need a kit for installing any number coming between a first implant with a first diameter A and five possible lengths L1, L2, L3, L4, L5 (where L1<L2<L3<L4<L5), a second implant with a second diameter B (where B>A) and four possible lengths, L1, L2, L3, L4, and a third implant with a third diameter C (where C>B) and three possible lengths L1, L2, and L3.

To install any first implant, we need to use utensils in four progressively increasing diameters a1, a2, a3 and a4 (where a1<a2<a3<a4<A), each in the five lengths L1, L2, L3, L4, L5: given that the drills all have a base with the same diameter that is suited to a first cylindrical guide corresponding to the first diameter needed for the first implant, the number of drills that need to be provided amounts to twenty.

To install any second implant, we need to use utensils in four progressively increasing diameters, a1, a2, a3 and a4, each in the five lengths L1, L2, L3, L4, L5, plus two utensils in two progressively increasing diameters b1 and b2, (where a4<b1<b2<B), each in the four lengths L1, L2, L3, L4: given that the drills all have a base with the same diameter that is suited to a second cylindrical guide corresponding to the second diameter needed for the second implant, eight additional drills are needed by comparison with the previous case, for a total of twenty-eight drills.

To install any third implant, we need to use utensils in four progressively increasing diameters, a1, a2, a3 and a4, each in the five lengths L1, L2, L3, L4, L5, plus two utensils in two progressively increasing diameters b1 and b2, (where a4<b1<b2<B), each in the four lengths L1, L2, L3, L4, and also another two utensils in two progressively increasing diameters c1 and c2 (where b2<c1<c2<C), each in the three lengths L1, L2 and L3: given that the drills all have a base with the same diameter that is suited to a third cylindrical guide corresponding to the third diameter required for the third implant, six additional drills are needed by comparison with the previous case, for a total of thirty-four drills.

Thus, it is consequently necessary to have as many as eighty-two drills in all.

### THE CASE OF AN IMPLANT SURGICAL KIT ACCORDING TO THE PRESENT INVENTION

Let us assume that we need a kit for installing any number coming between a first implant with a first diameter A and five possible lengths L1, L2, L3, L4, L5 (where L1<L2<L3<L4<L5), a second implant with a second diameter B (where B>A) and four possible lengths, L1, L2, L3, L4, and a third implant with a third diameter C (where C>B) and three possible lengths L1, L2, L3.

It will be necessary to have twenty drills, which coincide with those used in the conventional case for the installation of a first implant.

Using a first adapter according to the present invention, these twenty drills are made adaptable for use in the installation of a second implant, with the addition of just eight drills for the utensils in the diameters b1 and b2.

Using a second adapter according to the present invention, these twenty-eight drills are made adaptable for the installation of a third implant, with the addition of only six drills for the utensils in the diameters c1 and c2.

In all, it is consequently necessary to have only thirty-four drills.

It has been ascertained in practice that the implant surgical kit according to the invention is particularly advantageous due to the fact that it can be flexibly adapted to a variety of applications with an extremely limited number of instruments, enabling a considerable economic saving, among other things, relating to the cost of the drills, for instance, especially in the light of their short working life.

The implant surgical kit thus conceived is susceptible to numerous modifications and variants, all coming within the scope of the inventive concept; moreover, all the details may be replaced by technically equivalent elements.

In practice, any materials may be used and in any the dimensions, according to need and to the state of the art.

## Claims

1. An implant surgical kit for computer-assisted procedures comprising at least one instrument with a cylindrical base for supporting and guiding a utensil through a first cylindrical guide, **characterised in that** said base includes means for its connection to at least one interchangeable adapter for supporting and guiding said utensil in a second cylindrical guide with an internal diameter greater than that of said first guide.

2. An implant surgical kit for computer-assisted procedures according to claim 1, **characterised in that** said adapter is chosen from among a plurality of various adapters for supporting and guiding said utensil inside cylindrical guides with various internal diameters.

3. An implant surgical kit for computer-assisted procedures according to one or more of the previous claims, **characterised in that** said base, said utensil and said connection means are made in a single piece.

4. An implant surgical kit for computer-assisted procedures according to one or more of the previous claims, **characterised in that** said adapter comprises a bush suitable for being fitted coaxially over said base to which said adapter can be attached by means of a suitable member engaging with said connection means.

5. An implant surgical kit for computer-assisted procedures according to one or more of the previous claims, **characterised in that** said bush has an axial length corresponding to that of said base.

6. An implant surgical kit for computer-assisted procedures according to one or more of the previous claims, **characterised in that** said utensil is a drill.

7. An implant surgical kit for computer-assisted procedures according to one or more of the previous claims, **characterised in that** said utensil is a self-tapping utensil for the preparation of a threaded hole.

8. An implant surgical kit for computer-assisted procedures according to one or more of the previous claims, **characterised in that** said connection means comprise a threaded stem extending from the centre of the side of said base opposite the side from which said utensil extends.

9. An implant surgical kit for computer-assisted procedures according to one or more of the previous claims, **characterised in that** said engaging member comprises a threaded hole for screwing onto said stem.

10. An implant surgical kit for computer-assisted procedures according to one or more of the previous claims, **characterised in that** it has a retaining element for limiting the stroke of said utensil through said first guide, said retaining element consisting of a ring with an external diameter greater than that of said base and with an internal thread for screwing onto said stem.

11. An implant surgical kit for computer-assisted procedures according to one or more of the previous claims, **characterised in that** said adapter includes a retaining element for limiting the stroke of said utensil through said second guide.

12. An implant surgical kit for computer-assisted procedures according to one or more of the previous claims, **characterised in that** said retaining element extends radially from one side of said bush on which it is centred.

13. An implant surgical kit for computer-assisted procedures according to one or more of the previous claims, **characterised in that** said retaining element of said adapter and said bush of said adapter are made in a single piece.

14. An implant surgical kit for computer-assisted procedures according to one or more of the previous claims, **characterised in that** said threaded hole is provided in line with the centre of said retaining element of said adapter.

15. An implant surgical kit for computer-assisted procedures according to one or more of the previous claims, **characterised in that** said utensil has an internal channel for the circulation of a cooling fluid, and **in that** said channel emerges on the external lateral surface of said utensil through an outlet in the lateral surface of said utensil that extends in the direction of the cylindrical generatrices of said utensil.

16. An implant surgical kit for computer-assisted procedures according to one or more of the previous claims, **characterised in that** said drill has an apical guiding portion with no cutting profile, a first cutting profile coinciding with a first diameter in an area proximal to said apical portion, and at least a second cutting profile coinciding with a second diameter greater than said first diameter in an area further distal from said apical portion.

17. An implant surgical kit for computer-assisted procedures according to one or more of the previous claims, **characterised in that** it comprises said first instrument with said utensil that has a first length and a first diameter and is associated with a first plurality of its own said adapters, and at least a second instrument structurally conforming to said first instrument except that said utensil has a second length and/or a second diameter respectively different from said first length and/or said first diameter, and associated with a second plurality of its own said adapters.
